Europäisches Patentamt

European Patent Office

Office européen des brevets

(19)

(11) Publication number: **0 009 520**
**B1**

(12) **EUROPEAN PATENT SPECIFICATION**

(45) Date of publication of patent specification: **20.07.83**

(21) Application number: **78300270.2**

(22) Date of filing: **09.08.78**

(51) Int. Cl.³: **B 01 F 3/08, F 23 K 5/00, G 05 D 11/02 //B01F15/04**

(54) **Emulsifying system and method for mixing accurate quantities of two or more liquids.**

(43) Date of publication of application:
**16.04.80 Bulletin 80/8**

(45) Publication of the grant of the patent:
**20.07.83 Bulletin 83/29**

(84) Designated Contracting States:
**DE FR GB**

(56) References cited:
**CH - A - 468 597**
**DE - A - 2 632 403**
**DE - B - 1 508 551**
**FR - A - 2 158 651**
**FR - A - 2 318 385**
**GB - A - 1 325 954**
**US - A - 2 692 764**
**US - A - 3 499 632**
**US - A - 3 837 784**
**US - A - 3 876 363**

**Patents Abstracts of Japan, Volume 1, no. 91, 24 August 1977 page 1905 C 77**

(73) Proprietor: **R.E. FOLLAND CONSULTANTS INC.**
**179 Winderest**
**Hudson, Quebec, Canada JOP 1HO (CA)**

(72) Inventor: **Folland, Roy E.**
**R.R. No. 1 South Beech Ridge Road**
**Clarenceville Quebec (CA)**
Inventor: **Millar, Richard C.**
**137 Hillside Street**
**Otterburn Park Quebec (CA)**

(74) Representative: **Daley, Michael John et al,**
**F.J. CLEVELAND & COMPANY 40/43 Chancery Lane**
**London, WC2A 1JQ (GB)**

Courier Press, Leamington Spa, England

Emulsifying system and method for mixing accurate quantities of
tow or more liquids.

The present invention relates to an improved emulsifying system and method for mixing accurate ratios of two or more liquids to form an emulsion. Preferably, but not exclusively, the liquids are water and oil which are pressure regulated and the supply is isolated from a vented storage container which stores the emulsion to feed burning apparatus whereby to reduce pollutants which are released in the atmosphere and which also reduce the efficiency of burning a water/oil emulsion, less oil is consumed by the burning system. Various chemicals and apparatus have heretofore been provided in an attempt to achieve such objectives. However, such known methods and apparatus have not proved to be entirely efficient and economical.

Surfactants are sometimes used to break down the surface tension of one of the fluids to be mixed together, whereby to enable the mixing to take place. Surfactants are usually expensive and require additional savings in the system construction whereby to justify the cost thereof. Also, it has been found that surfactants promote boiler and flue corrosion. The very fact that the surface tension is reduced, eliminates or diminishes the microexplosions which take place with an emulsion produced without surfactants. These microexplosions are important to the improved performance of burning emulsion.

It is also known to use sonic whistles or similar type devices together with high pressure pumps to produce a desired emulsion. However, known systems which use such devices do not provide means to reduce capacity in order to correspond to varying firing rates of burners, without reducing feed pressures. The reduction of feed pressures seriously reduces the effectiveness of this type of equipment thereby providing a drawback.

Another type of apparatus known is the piston type homogenizer which is used to produce emulsions from water and oil. These homogenizers, however, require very large amounts of horsepower, require frequent maintenance, and are expensive.

Another type of prior art device known is the ultrasonic reactor which is used to produce a water/oil emulsion. This equipment is, however, very expensive, and uneconomical. Also, such reactors are known to fail due to overpressure, startup with coil oil, etc. This type of system is susceptible to damage from external pressure sources.

Controlling water to oil ratio is very difficult because there is a reliance on standard control items which in themselves are not accurate while trying to proportion through the range of firing rates of a burner system. Known methods and devices, such as those described above, are also very costly.

Attention is also directed to the disclosures in U.K. Patent Specifications 1096597 (German 1508551) and 1539406 (French 2318385). In the former the invention consists of an oil burning apparatus comprising means to mix predetermined proportions of oil and water, a pump to compress the mixture and form it into an emulsion without the use of an emulsifying agent or the admixture of a gas, and an atomizing oil burner or fuel injector through which the emulsion is forced by the pump.

In the latter the invention concerns a process and apparatus for burning combustible liquid waste products by means of a burner having two nozzles of different speeds by feeding to the nozzle of lower speed a light gaseous or liquid fuel and by feeding to the nozzle of higher speed a heated aqueous emulsion of combustible liquid waste products, the process including preparation of a first emulsion of a surfactant in water, establishing a flow under pressure in a closed circuit between a main preparation container fed with liquid waste products and a buffer container and feeding the first emulsion into the closed circuit to form a combustible mixture in the form of a final stable emulsion which is heated and is fed to the nozzle of higher speed for burning.

Recirculating or circulating emulsion through a burner system has been very difficult, if not impossible to achieve, because of the problem of contaminating the straight oil with emulsion.

It is, therefore, a feature of this invention to substantially overcome all of the above-mentioned disadvantages of the prior art and provide an emulsifying system for mixing two or more liquids to form a stable emulsion.

A further feature of the present invention is to substantially eliminate the use of surfactants or any other chemical which is only used to produce such an emulsion.

A still further feature of the present invention is to provide a water/oil emulsion for burning and very accurately controlling the pressure of incoming fuel oil and water, always at one constant flow rate, to permit the control of very accurate proportions of water and oil at any desired percentage, and at very reasonable cost.

A still further feature of the present invention is to store the emulsion in a container which is vented to atmosphere and totally isolate the output circuit from the high pressure supplies and to recirculate the emulsion to maintain it in a stable state and further to recirculate the emulsion through the burner system, in the same manner as the oil system is circulated without contaminating the straight oil with emulsion.

Another feature of the present invention is to produce an emulsion for feeding mixing devices such as ultrasonic reactors, or cells whereby to considerably increase the flow capacity therethrough to render such apparatus more economical.

According to the present invention there is provided an emulsifying system for mixing accurate ratios of two or more liquids to form an emulsion, said system comprising:

regulated supply means for the liquids with output conduit means comprising valves for controlling the output flow rate

mixing means, fed from the said supply means, to provide an accurate mixture of the liquids

emulsifying device connected to said mixing means to provide an emulsion with a predetermined mixture rate

an emulsion consuming device, connected to the emulsifying device

a recirculating circuit comprising a recirculating pump to obtain a stable and uniform emulsion, and feeding emulsion from a point between the consuming device and the pump to a point between the mixing means and the emulsifying device

characterised in that a storage means is provided between the recirculating pump and the emulsion consuming device

volume control means to control the volume in the storage means between two predetermined levels

regulating means for regulating the input flow rate when depending on the output flow rate the volume is no longer between the predetermined levels

a recirculating circuit feeding emulsion from the consuming device back to the storage device

regulating means controllably to isolate the storage means from the regulated supply means in response to a signal from the input flow rate regulating means.

According to a further feature of the invention there is provided a method of mixing two or more liquids in the above system comprising the steps of:—

(i) mixing said two or more liquids in said mixing means in an accurate proportion to form a mixture,

(ii) producing an emulsion from said mixture, by means of the emulsifying device,

(iii) supplying said emulsion to the storate means to maintain the emulsion level in said storage means between predetermined limits,

(iv) withdrawing said emulsion from said storage means at a rate independent of the rate at which said emulsion is supplied to said storage means as long as the level is between said predetermined limits,

(v) feeding said emulsion withdrawn from said storage means to the emulsion consuming device and through the recirculating circuit to the emulsifying device where said emulsion is regenerated and fed back to said storage means.

A preferred embodiment of the present invention will now be described by way of example only with reference to the figures of the accompanying drawings, in which:—

Figure 1 is a schematic diagram of the emulsifying system, and

Figure 2 is a sectional view of an example of the construction of an injector device.

Referring now to the drawings, there is shown generally at 10, the emulsifying system of the present invention for mixing accurate ratios of water and oil taken from a water supply line 11 and an oil supply line 12, to form a water/oil emulsion for feeding burning apparatus (not shown) and fed at the emulsion output supply line 13. A pressure regulator 14, of simple and inexpensive design and of a type known in the art, is connected in the water supply line 11 to feed water under pressure to an injector device 15. Similarly, a back pressure regulator 16 is provided in the return line 17 which connects to the oil line 12 to also feed oil under pressure to the injector 15. This pressure regulator is also of the type well known in the art. The purpose of using a back pressure regulator is to maintain a constant oil pressure in the oil line 12 while at the same time permitting recirculation of oil. When the system 10 is in use, the bypass valve 18 automatically shuts off thereby automatically disconnecting the bypass line 19 from the emulsion output supply line 13.

A flow restriction means, herein a ratio adjustment valve 20, is connected in the supply line 11 downstream of the pressure regulator 14. A similar flow restriction means or ratio adjustment valve 21, is connected in the oil supply line 12 also downstream of the pressure regulator. These valves 20 and 21 are adjustable needle valves of the type well known in the art, and adjust the flow rates through the supply lines 11 and 12, respectively to permit the proper ratio of water and oil to be fed to the inputs 22 and 23, respectively of the injector 15. This ratio is normally of the order of up to one part of water to four parts of oil.

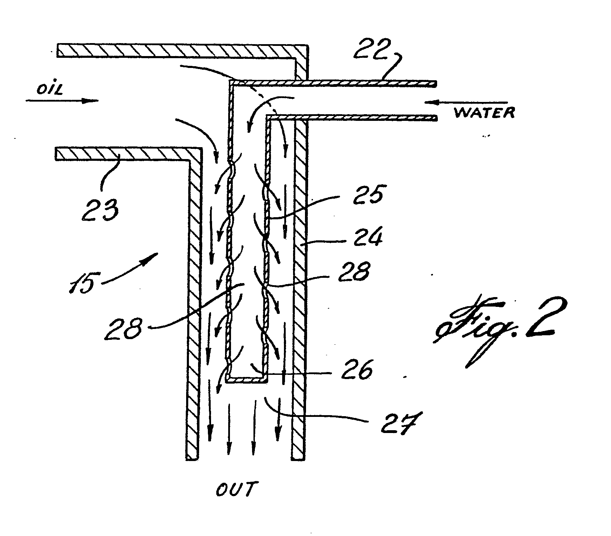

Referring now, more specifically, to Figure 2, there is shown an example of how the injector 15 may be constructed. As herein shown, the injector 15 consists of a simple T-shaped mixing device consisting of an outer tubular portion 24 and an inner tubular portion 25 having an outlet portion 27 of the outer tubular portion 24. The output end portion 26 is perforated as shown at 28 to permit water within the inner tubular portion 25 to be released in the outlet portion of the outer tubular portion 24 to mix with oil flowing within the outlet tubular portion. This permits the water to be released in close contact with the oil whereby the water and oil particles will mix. As hereinabove mentioned, this is only an example of the construction of the injector and many other types of injector devices can be provided.

The water/oil emulsion or mixture at the outlet portion 27 of the injector 15 is fed to emulsifying means being a pressure pump 46 feeding a pressure mixer 48. The emulsion at the output of the mixer 48 is fed to a container 40. This container 40 constitutes a storage means for a quantity of the water/oil emulsion fed to it from the injector 15. The pressure in the container 40 is controlled, for example, by means of a vent 41, herein schematically illustrated. The container 40 is further provided with a recirculating circuit 42 which consists of an emulsion recirculating conduit 43 connected in a loop from an outlet 44, taken from the bottom of the container 40, to an inlet of the pressure pump 46. The pressure pump 46 is driven by a pump motor 47. The pressure mixer 48 takes the full pressure drop of the pressure pump 46 whereby to generate the emulsion. The outlet from the pressure mixer 48 is fed to the inlet 45 of the container 40.

The container 40 is provided with a volume control means which is constituted by a level float switch 54. Further a temperature sensing device 51 may be provided to sense the temperature of the emulsion in the container to make sure it does not fall below a certain predetermined temperature. A heater element 52 may also be connected to the temperature sensing device to heat the emulsion when it falls below the predetermined temperature. The heater element 52 is controlled by the temperature sensing device 51.

When the level of the emulsion within the container 40 falls below a predetermined low level or exceeds a predetermined high level, a signal is given to a shut-off valve 53 located in the flow line connected to the output portion 27 of the injector 15. This signal will either cause the shut-off valve 53 to open or close. Thus the valve 53 is either in a fully open or a fully closed position. The level switch 54 may be connected directly to the shut-off valve 53. High and low level float switches 49 and 50 protect against excessive volume changes.

The shut-off valve 53 can also be of a slow opening or slow closing type, i.e., four or five seconds, in order to give the regulators time to lock up or seat themselves, depending on the type of regulators utilized. In the event that the regulating system were to consist of receivers or pans, then this valve may be of the fast opening fast closing solenoid type. The pressure pump 46 may also consist of any type of positive displacement pump such as a gear pump, triplex piston pump, which will give sufficient pressure for it to cause the desired effect when processing the fluids through the pressure mixer 48.

In the event that the recirculation of the emulsion causes the temperature to increase beyond the desired predetermined temperature, then coolers 55 may be provided in the recirculating conduit 43 to prevent the emulsion temperature from exceeding the predetermined desired temperature. Check valve 56 is provided in the conduit 43 to permit unidirectional flow of the emulsion. Also, the pressure in the line 43 may be monitored by the provision of a pressure gauge 56' downstream of the pressure pump 46.

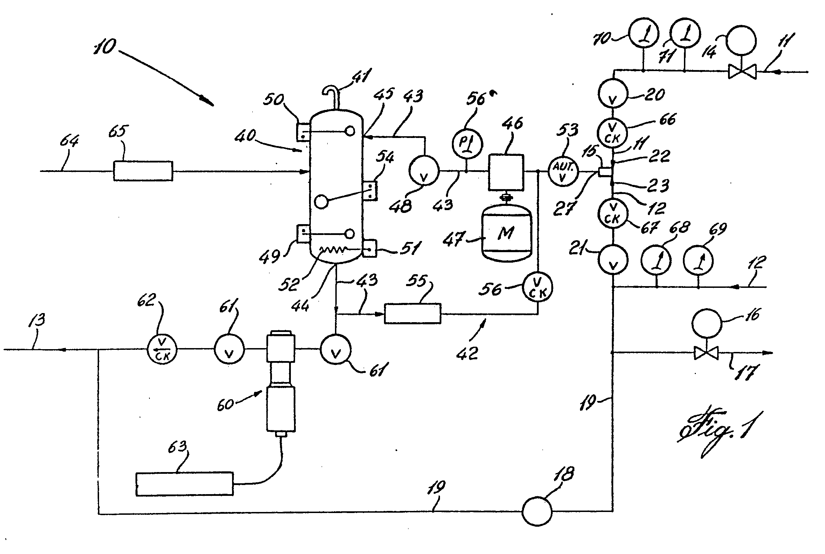

It can be noted that with the above system, there is provided a storage of an emulsion which is maintained in a desired stable state and which is isolated from the pressure supplies. Such emulsion may be fed directly to burner apparatus (not shown) without subjecting such burner apparatus to pressures within the emulsifying system. In one application of the system, as shown in Figure 1; the outlet 44 of the container 40 may be connected to a mixer device 60 whereby the emulsion particles are further broken down to provide a finer mix before delivery to the burner device (not shown). As herein illustrated, for purpose of example only, the mixer device 60 is a high frequency mixer device capable of shattering water particles to obtain a finer emulsion. As previously described, an ultrasonic reactor cell may herein be provided and emulsion is fed into a cavity (not shown) incorporating an ultrasonic vibrator (not shown) to cause a breakdown of the emulsion particles. Shut-off valves 61 are provided on each side of the mixer device 60 to permit replacement of this mixer device by other suitable devices or to interconnect the valves 61 directly when such further mixer device 60 is not required. A check valve 62 insures unidirectional flow to the emulsion output supply line 13. As also shown in Figure 1, a power supply 63 feeds the high frequency mixing device 60.

As further shown in Figure 1, a bypass return line 64 from the burner device (not shown), is connected to the container 40. Coolers 65 may also be provided in the bypass return line 64 to regulate the temperature of the emulsion therein. Also, unidirectional valves 66 and 67 are provided, respectively, in the supply lines 11 and 12 to permit unidirectional flow. Oil pressure switch 68 and oil temperature limit switch 69 monitor the temperature and pressure of the oil within the oil supply line 12. Similarly, low pressure water limit switch 70 and percent water gauge 71 monitor the water supply line 11.

The pressure mixer 48 may have various type constructions. With the use of bunker "C" fuel oil, there is always the chance of dirt coming through the system and plugging orifices and consequently it may be advisable to use an orifice arrangement together with a pressure unloading valve which will discharge back to the inlet of the pressure pump 46 or possible to the container 40 in the event that the orifice was to plug. On the other hand a common ball-type relief valve, such as the type identified by the registered Trade Mark "NUPRO" may be used. In the event, of course, of an accumulation of dirt, then the ball in the valve would simply raise to clear itself. It may also be possible to use a simple chamber with various shape orifices or with an annular orifice, again using a pressure unloader or relief valve to prevent plugging. A still further alternative would be to use a sonic whistle of a type known in the art. Additionally, the efficiency of such whistle or any other device could be improved by modifying the discharge end to amplify the pressure fluctuations which theoretically should increase the performance.

The size of the container 40 may vary depending on the requirement of the application of the system. Various modifications of the system are seen without departing from the broad scope of the invention as defined by the appended claims.

The method of operation of this system can be summarized as follows. The water and oil supply lines are each provided with a pressure regulator whereby to supply water and oil to an injector device 15. The supply of the water and oil is regulated by ratio adjusting valves 20 and 21 respectively. The mix of water and oil at the outlet of the injector 15 is fed to a container 40 via a shut-off valve 53, and when the level of the emulsion 40 reaches a predetermined high level, the shut-off valve 53 is shut off, therefor isolating the pressure regulator supply lines from the container 40. The emulsion in the container 40 is recirculated through a recirculating circuit 42 and the emulsion is maintained in a stable state by a pressure mixer 48 which is fed by pressure pump 46 located in the emulsion recirculating circuit 42. The outlet of the container 40 is connected to burner apparatus (not shown) or to a further mixer device 60. As the emulsion is consumed, the level of the emulsion in the container 40 drops and when it reaches a predetermined low level, where it is necessary to replenish the container 40, the shut-off valve 53 is opened supplying more emulsion to the container 40. The size of the container 40 is selected to approximately supply the burner device (not shown). It can be seen that whilst the container 40 is being supplied, the pressure from the water and oil supply lines will be vented through the container 40 as the check valve 56 will prevent any direct connection of these supply lines to the burner device (not shown) or the mixer device 60.

The emulsifying means, defined herein, could, for example, be an ultrasonic emulsifying device of a type known in the art similar to device 60. Also, as above mentioned, the proportioning and mixing of the liquids can be effected in a variety of ways. It is also foreseen that this system could be utilized as an economical means of providing emulsions for uses other than for combustion, for example in applications to the food and cosmetic industry.

It is further pointed out, that due to the improved combustion process resulting from the burning of the emulsion produced by the invention, particulate emissions is drastically reduced thereby making this invention a most important pollution control apparatus. Furthermore, there is achieved a great improvement of energy conservation.

**Claims**

1. An emulsifying system for mixing accurate ratios of two or more liquids to form an emulsion, said system comprising:
regulated supply means (11, 12) for the liquids with output conduit means comprising valves (20, 21, 53) for controlling the output flow rate,
mixing means (15), fed from the said supply means, to provide an accurate mixture of the liquids,
emulsifying device (48) connected to said mixing means to provide an emulsion with a predetermined mixture rate,
an emulsion consuming device, connected to the emulsifying device,
a recirculating circuit (43) comprising a recirculating pump (46) to obtain a stable and uniform emulsion, and feeding emulsion from a point between the consuming device and the pump to a point between the mixing means and the emulsifying device;
characterised in that a storage means (40) is provided between the recirculating pump and the emulsion consuming device,
volume control means (54) to control the volume in the storage means between two predetermined levels,
regulating means (54) for regulating the input flow rate when depending on the output flow rate the volume is no longer between the predetermined levels,
a recirculating circuit (64) feeding emulsion from the consuming device back to the storage device,
regulating means (53) controllably to isolate the storage means from the regulated supply means in response to a signal from the input flow rate regulating means (54).

2. A system as claimed in claim 1 wherein said emulsion is a water/oil emulsion for use as a combustible fuel.

3. A system as claimed in claim 2 wherein said means for supplying an accurate mixture comprises injection means (15) fed by a regulated water and oil supply (11—12) to provide said accurate mixture of said water and oil, said injection means is an injector device having a water flow inlet (22) and an oil flow inlet (23) connected respectively to said water and oil regulated supplies, conduit means (24) to release water and oil flows from said inlets to mix in said injector device, said regulated supplies being pressure regulated supplies, said pressure regulated supplies each have a pressure regulating device (68, 69, 70) and a flow restriction means (20—21) located downstream of said pressure regulating device, said flow restriction means controlling the flow rate of said water and oil supplies for delivery to said water flow inlet and oil flow inlet, respectively, of said injection device.

4. A system as claimed in claim 3, wherein said water/oil emulsion is drawn into said recirculating circuit by said recirculating pump (46), said emulsifying device (48) being connected between said recirculating pump (46) and said storage means (40), said storage means being provided with volume control means (49—50) to control the flow of said water/oil emulsion from said injection means to said storage means, said storage means further comprising temperature control means (51) to maintain said water/oil emulsion at a desired temperature, input means (64) connected to said storage means to feed back water/oil emulsion from a burner, and wherein said output circuit is connected to said burner whereby said burner draws said water/oil emulsion from said storage means when in operation.

5. A system as claimed in claim 1, wherein valve means (53) is provided downstream of said means for supplying an accurate mixture to isolate said storage means from pressure from said means for supplying said accurate mixture.

6. A system as claimed in Claim 1, wherein said storage means is vented (41) to atmosphere.

7. A method for mixing two or more liquids in a system according to Claim 1 comprising the steps of:—

(i) mixing said two or more liquids in said mixing means in an accurate proportion to form a mixture,

(ii) producing an emulsion from said mixture, by means of the emulsifying device,

(iii) supplying said emulsion to the storage means to maintain the emulsion level in said storage means between predetermined limits,

(iv) withdrawing said emulsion from said storage means at a rate independent of the rate at which said emulsion is supplied to said storage means as long as the level is between said predetermined limits,

(v) feeding said emulsion withdrawn from said storage means to the emulsion consuming device and through the recirculating circuit to the emulsifying device where said emulsion is regenerated and fed back to said storage means.

**Patentansprüche**

1. Emulgiersystem zum Mischen zweier oder mehrerer Flüssigkeiten in genauen Mengenverhältnissen, um eine Emulsion zu erzeugen, wobei das System umfaßt:

Mittel (11, 12) für eine geregelte Zufuhr der Flüssigkeiten mit Auslaßleitungsmitteln, die Ventile (20, 21, 53) zum Regeln der Auslaßströmungsmenge aufweisen,

Mischmittel (15), die von den Zufuhrmitteln beschickt werden, um eine genaue Mischung der Flüssigkeiten zu erzeugen,

Emulgiervorrichtung (48), die mit den Mischmitteln verbunden ist, um eine Emulsion mit einem vorbestimmten Mischungsverhältnis zu erzeugen,

eine Emulsionsverbrauchsvorrichtung, die mit der Emulgiervorrichtung verbunden ist,

einen Rezirkulationskreis (43), der eine Rezirkulationspumpe (46) aufweist, um eine stabile und gleichmäßige Emulsion zu erhalten, und Emulsion von einer Stelle zwischen der Verbrauchsvorrichtung und der Pumpe zu einer Stelle zwischen den Mischmitteln und der Emulgiervorrichtung führt,

dadurch gekennzeichnet, daß eine Speichereinrichtung (40) zwischen der Rezirkulationspumpe und der Emulsionsverbrauchsvorrichtung vorgesehen ist,

Volumenregelmittel (54) zum Einregeln des Volumens in der Speichereinrichtung zwischen zwei vorbestimmten Pegeln,

Reguliermittel (54) zum Regulieren der Einlaßströmungsmenge, wenn abhängig von der Auslaßströmungsmenge das Volumen nicht mehr zwischen den vorbestimmten Pegeln ist,

ein Rezirkulationskreis (64), der Emulsion von der Verbrauchsvorrichtung zurück zu der Speichereinrichtung führt,

Reguliermittel (53) zum gesteuerten Trennen der Speichereinrichtung von den Mitteln für die regulierte Zufuhr als Antwort auf ein Signal von den Einlaßströmungsmengenreguliermitteln (54).

2. System nach Anspruch 1, wobei die Emulsion eine Wasser/Öl-Emulsion zur Verwendung als Brennkraftstoff ist.

3. System nach Anspruch 2, wobei die Mittel zum Zuführen einer genauen Mischung umfassen Injektionsmittel (15), die von einer regulierten Wasser- und Ölzuführung (11—12) beschickt werden, um die genaue Mischung aus dem Wasser und dem Öl zu erzeugen, die Injektionsmittel eine Injektionsvorrichtung sind, bei der ein Wasserstromeinlaß (22) und ein Ölstromeinlaß (23) in dieser Reihenfolge mit der regulierten Wasser- und Ölzuführung verbunden ist, Leitungsmittel (24) zum Freigeben von Wasser- und Ölströmen aus den Einlässen zum Mischen in der Injektionsvorrichtung, wobei die regulierten Zuführungen druckregulierte Zuführungen sind, wobei jede der druckregulierten Zuführungen eine Druckreguliervorrichtung (68, 69, 70) und eine Strömungsdrosseleinrichtung (20—21) hat, die stromabwärts der Druckreguliervorrichtung angeordnet ist, wobei die Strömungsdrosseleinrichtung die Strömungsmenge der Wasser- und Ölzuführungen für die jeweilige Zufuhr zu dem Wasserströmungseinlaß und dem Ölströmungseinlaß der Injektionsvorrichtung reguliert.

4. System nach Anspruch 3, wobei die Wasser/Öl-Emulsion von der Rezirkulationspumpe (46) in den Rezirkulationskreis gesaugt wird, die Emulgiervorrichtung (48) zwischen die Rezirkulationspumpe (46) und die Speichereinrichtung (40) geschaltet ist, die Speichereinrichtung Volumenregelmittel (49—50) zum Regeln der Wasser/Öl-Emulsionsströmung von den Injektionsmitteln zu der Speichereinrichtung aufweist, die Speichereinrichtung außerdem Temperaturregelmittel (51) zum Halten der Wasser/Öl-Emulsion auf einer gewünschten Temperatur aufweist, Einlaßmittel (64), die mit der Speichereinrichtung verbunden sind, um Wasser/Öl-Emulsion von einem Brenner zurückzuführen, und wobei der Auslaßkreis mit dem Brenner verbunden ist, wodurch der Brenner im Betrieb Wasser/Öl-Emulsion aus der Speichereinrichtung ansaugt.

5. System nach Anspruch 1, wobei Ventilmittel (53) stromabwärts der Mittel zum Zuführen einer genauen Mischung zum Trennen der Speichereinrichtung vom Druck von den Mitteln zum Zuführen der genauen Mischung vorgesehen sind.

6. System nach Anspruch 1, wobei die Speichereinrichtung zur Atmosphäre hin entlüftet (41) ist.

7. Verfahren zum Mischen zweier oder mehrerer Flüssigkeiten in einem System gemäß Anspruch 1, mit den Schritten:—

(i) Mischen der zwei oder mehreren Flüssigkeiten in den Mischmitteln in einem genauen Verhältnis, um die Mischung zu erzeugen,

(ii) Herstellen einer Emulsion aus der Mischung mittels der Emulgiervorrichtung,

(iii) Zuführen der Emulsion zu der Speichereinrichtung, um den Emulsionspegel in der Speichereinrichtung zwischen vorbestimmten Grenzen zu halten,

(iv) Abführen der Emulsion aus der Speichereinrichtung in einer Menge, die unabhängig von der Menge ist, in der die Emulsion der Speichereinrichtung zugeführt wird, solange sich der Pegel zwischen den beiden vorbestimmten Grenzen befindet,

(v) Leiten der von der Speichereinrichtung abgeführten Emulsion zu der Emulsionsverbrauchsvorrichtung und durch den Rezirkulationskreis zu der Emulgiervorrichtung, wo die Emulsion regeneriert und zu der Speichereinrichtung zurückgeführt wird.

**Revendications**

1. Système d'émulsion pour mélanger des quantités précises de deux ou plusiers liquides destinés à produire une émulsion, ledit système comprenant:

des moyens (11, 12) pour introduire les liquides de façon réglée incluant des moyens définissant une canalisation de débit comprenant des valves (20, 21, 53) pour contrôler le taux de débit,

des moyens (11, 12) pour mélanger, alimentés par lesdits moyens d'approvisionnement de façon à donner un mélange précis de liquides,

un dispositif d'émulsion (48) relié auxdits moyens pour mélanger de façon à donner une émulsion avec un taux de mélange prédéterminé,

un dispositif à consommation d'émulsion, relié au dispositif d'émulsion,

un circuit de recirculation (43) comprenant une pompe recirculante (46) de façon à donner une émulsion stable et uniforme, et alimentant l'émulsion à partir d'un point entre le dispositif de consommation et la pompe jusqu'à un point entre les moyens pour mélanger et le dispositif d'émulsion;

caractérisé par le fait que l'on prévoit des moyens d'emmagasinage (40) entre la pompe recirculante et le dispositif à consommation d'émulsion,

des moyens de contrôle de volume (54) pour contrôler le volume dans les moyens d'emmagasinage entre deux niveaux prédéterminés,

des moyens de réglage (54) pour régler le débit d'entrée ce dernier dépendant du débit de sortie alors que le volume n'est plus entre deux niveaux prédéterminés,

un circuit de recirculation (64) pour réalimenter l'émulsion à partir du dispositif de consommation au dispositif d'emmagasinage,

des moyens de réglage (53) pour isoler de façon contrôlée les moyens de storage des moyens d'alimentation réglés en réponse à un signal des moyens de régler le taux de débit (54).

2. Système selon la revendication 1 dans lequel ladite émulsion est une émulsion eau/huile pour utilisation comme combustible.

3. Système selon la revendication 2 dans lequel lesdits moyens pour alimenter un mélange précis comprennent des moyens d'injection (15) alimentés par un approvisionnement réglé en eau et en huile (11—12) pour assurer ledit mélange précis d'eau et d'huile, lesdits moyens d'injections sont constitués par un dispositif injecteur ayant une entrée de débit d'eau (22) et une entrée de débit d'huile (23) reliés respectivement auxdites alimentations réglées en eau et en huile, les moyens de canalisation (24) pour libérer des débits d'eau et d'huile à partir desdites entrées pour être mélangés dans le dispositif injecteur, lesdites alimentations réglées étant des alimentations réglées sous pression, lesdites alimentations réglées sous pression possédant chacune un dispositif de réglage à pression (68, 69, 70) des moyens de restreindre le débit (20—21) situé en aval dudit dispositif à régler la pression, desdits moyens de restreindre le débit contrôlant le débit des alimentations d'eau et d'huile pour les introduire dans l'entrée du débit d'eau et dans l'entrée du débit d'huile, respectivement, du dispositif à injection.

4. Un système selon la revendication 3, dans lequel ladite émulsion eau/huile est introduite dans le circuit de recirculation par la pompe recirculante (46), ledit dispositif d'émulsion (48) étant relié entre ladite pompe recirculante (40) et lesdits moyens d'emmagasinage (40), lesdits moyens d'emmagasinage étant munis d'un moyen de contrôle de volume (49—50) pour contrôler le débit de l'émulsion eau/huile à partir des moyens d'injection vers les moyens d'emmagasinage, lesdits moyens d'emmagasinage comprenant de plus des moyens de contrôle de la température (51) pour maintenir ladite émulsion eau/huile à une température désirée, des moyens d'introduction (64) reliés auxdits moyens d'emmagasinage pour recycler l'émulsion eau/huile du brûleur et dans lequel le circuit de sortie est relié au brûleur faisant en sorte que ledit brûleur se nourrit de l'émulsion eau/huile à partir des moyens d'emmagasinage lorsqu'il est en opération.

5. Un système selon la revendication 1, dans lequel les valves (53) sont prévues en aval desdits moyens pour alimenter un mélange précis de façon à isoler les moyens d'emmagasinage de la pression résidant dans les moyens pour alimenter ledit mélange précis.

6. Un système selon la revendication 1, dans lequel lesdits moyens d'emmagasinage sont pourvus d'évents (41) vers l'atmosphère.

7. Une méthode de mélange de deux ou de plusieurs liquides dans un système selon la revendication 1 comprenant les étapes suivantes:

(i) mélanger les deux dits ou plusieurs liquides dans lesdits moyens pour mélanger dans des proportions précises pour former un mélange,

(ii) produire une émulsion à partir dudit mélange au moyen du dispositif d'émulsion,

(iii) introduire ladite émulsion dans les moyens d'emmagasinage de façon à maintenir le niveau d'émulsion dans lesdits moyens d'emmagasinage entre deux limites prédéterminées.

(iv) enlever ladite émulsion desdits moyens d'emmagasinage à un taux indépendant du taux auquel ladite émulsion est introduite dans lesdites moyens d'emmagasinage aussi longtemps que le niveau se situe entre les deux limites prédéterminées,

(v) introduire ladite émulsion enlevée desdits moyens d'emmagasinage dans le dispositif de consommation d'émulsion et à travers le circuit de recirculation, vers le dispositif d'émulsion où ladite émulsion est regénérée et réintroduire dans lesdits moyens d'emmagasinage.

Fig. 1

0 009 520

OIL

WATER

22

23

15

28

25

24

28

28

26

27

Fig. 2

OUT